# EUROPEAN PATENT APPLICATION

(11) **EP 4 641 257 A1**
(43) Date of publication of application: **29.10.2025**
(21) Application number: 22969279.3
(22) Date of filing: 23.12.2022
(51) Int. Cl.: G01S 17/42

(54) **TWO-DIMENSIONAL SCAN SENSOR**

(71) Applicant: Optex Co., Ltd., Otsu-shi, Shiga 520-0101 (JP)
(72) Inventor: FUJIWARA, Kunio, Otsu-shi, Shiga 520-0101 (JP)
(74) Representative: Müller Hoffmann & Partner
(86) International application number: PCT/JP2022/047734
(87) International publication number: WO 2024/134900

(57) **Abstract**

In order to make it possible to measure distance regardless of mounting orientation, and avoid repeat work due to incorrect installation, the present invention is configured so as to comprise: a sensor unit 10 that scans light emitted from a light source 11 along a two-dimensional plane; a distance measurement unit 21 that calculates a distance from a reference surface to an object located in the two-dimensional plane based on a time from when the light source 11 emits light to when light that has been reflected off the object is received; an orientation detection means 30 for detecting the orientation of a specified part P of the sensor unit 10; and a processing modification unit 23 that modifies a calculation algorithm of the distance measurement unit 21 based on orientation information obtained by the orientation detection means 30.

## Description

### [Technical Field]

The present invention relates to a two-dimensional scan sensor.

### [Background Art]

In convention, two-dimensional scan sensors have been configured to measure the distance to an object or the height of an object from, e.g., the surface of the floor, based on the time between when a light source emits light and when the light is received after having been reflected off the object.

In such a configuration, when in a use state in which, for example, the height of an object from a floor surface is measured, it is necessary that the device be installed and handled so that a specified part, such as a specific screw, faces the floor surface.

However, if a mistake is made and the device is installed so that the specified part faces, for example, a wall surface, the distance from the wall surface to the object will be measured instead of the distance from the floor surface, and the height of the object will not be measured correctly.

In particular, as shown in Patent Literature 1, in cases where the device can be attached to a wall surface or a ceiling, and the device has a high degree of freedom in installation such that the specified part may be oriented in various directions, such as forward or backward, left or right, up or down, etc., the problem of incorrect installation described above becomes more pronounced, such that the incorrect installation will be noticed when checking the operation, and the problem of having to go back and perform repeat work will easily arise.

### [Citation List]

### [Patent Literature]

[PTL 1] Japanese Patent No. 6155386

### [Summary of Invention]

### [Technical Problem]

Therefore, the present invention has been made to solve the above-mentioned problems, and it is an object of the present invention to make it possible to measure distance regardless of mounting orientation, and avoid repeat work due to incorrect installation.

### [Solution to Problem]

A two-dimensional scan sensor according to the present invention includes: a sensor unit that scans light emitted from a light source along a two-dimensional plane; a distance measurement unit that calculates a distance from a reference surface to an object located in the two-dimensional plane based on a time from when the light source emits light to when light that has been reflected off the object is received; an orientation detection means for detecting an orientation of a specified part of the sensor unit; and a processing modification unit that modifies a calculation algorithm of the distance measurement unit based on orientation information obtained by the orientation detection means.

According to a two-dimensional scan sensor configured like this, the orientation of a specified part of the sensor unit is detected, and the calculation algorithm of the distance measurement unit is modified based on the orientation information, so that distance measurements can be performed regardless of the mounting orientation, and it is possible to prevent repeat work due to incorrect installation.

It is preferable that the sensor unit is capable of scanning light emitted from the light source along a vertical plane, and that the distance measurement unit is capable of calculating a height of the object from the reference surface.

Configured like this, the height of the object can be measured correctly regardless of the mounting orientation.

It is preferable that, in a use state in which light emitted from the light source is scanned along the vertical plane, the mounting posture of the sensor unit is changeable between a first posture in which the specified part faces a first direction, and a second posture in which the specified part faces a second direction orthogonal to the first direction.

Configured like this, it is possible to improve the degree of freedom of installation, and to avoid repeat work due to incorrect installation.

It is preferable that the processing modification unit determines whether or not the orientation of the specified part indicated by the orientation information is a normal orientation and switches the calculation algorithm of the distance measurement unit between one for use in normal orientation and one for use in abnormal orientation.

Configured like this, processing is simplified because the calculation algorithm can be selectively switched between one for normal orientation or one for abnormal orientation.

A specific embodiment aiming to simplify the performed processing is one wherein the distance measurement unit is configured to calculate the distance from the reference surface to the object using a plurality of steps 1 - N set so as to partition the a scanning range of light from the sensor unit, and a sequence of steps 1 - N included in the calculation algorithm for use in the normal orientation and a sequence of steps 1 - N included in the calculation algorithm for use in the abnormal orientation are reversed.

It is preferable for the two-dimensional scan sensor to further include a mask processing unit that, within a scanning range of light from the sensor unit, disables detection of objects in a mask range set in advance, and a second processing modification unit that modifies a mask processing algorithm of the mask processing unit based on the orientation information.

Such a configuration provides a mask function to prevent false alarms due to the detection of trees, for example, while allowing this mask function to operate correctly regardless of the mounting orientation of the sensor.

It is preferable that two-dimensional scan sensor includes an imaging means that images a part or a whole of a scanning range of light from the sensor unit, an image display unit that displays an image obtained from the imaging means, and a third processing modification unit that modifies display content of the image displayed by the image display unit.

Such a configuration is able to provide an image display function for improved usability, while allowing the image display function to operate correctly regardless of the mounting orientation of the sensor.

It is preferable that the third processing modification unit corrects a position of an object captured in the image or a position of a marker indicating a position of an object appearing in the image.

Configured like this, it is possible to improve the decipherability of the image.

### [Effect of the Invention]

According to the present invention, it is made possible to measure distance regardless of mounting orientation, and to avoid repeat work due to incorrect installation.

### [Brief Description of Drawings]

[Fig. 1] A schematic diagram showing a configuration of a two-dimensional scan sensor according to an embodiment of the present invention.
[Fig. 2] A functional block diagram showing functions of the information processing device of the same embodiment.
[Fig. 3] A schematic diagram showing a state in which the two-dimensional scan sensor of the same embodiment is installed on a ceiling.
[Fig. 4] A schematic diagrams illustrating the problem caused by incorrect installation in the case of a conventional two-dimensional scan sensor.
[Fig. 5] A schematic diagram illustrating a first posture of the sensor unit of the same embodiment.
[Fig. 6] A schematic diagram illustrating a second posture of the sensor unit of the same embodiment.
[Fig. 7] A flowchart illustrating the operation of a processing modification unit according to the same embodiment.
[Fig. 8] A schematic diagram illustrating the operation of the processing modification unit according to the same embodiment.
[Fig. 9] A schematic diagram illustrating the operation of a second processing modification unit of the same embodiment.
[Fig. 10] A schematic diagram illustrating the operation of a second processing modification unit of the same embodiment.
[Fig. 11] A schematic diagram illustrating the operation of a third processing modification unit of the same embodiment.
[Fig. 12] A schematic diagram illustrating the operation of a third processing modification unit of the same embodiment.
[Fig. 13] A schematic diagram illustrating the operation of a third processing modification unit of the same embodiment.

### [Description of the Embodiments]

A two-dimensional scan sensor according to an embodiment of the present invention will now be described with reference to the drawings.

### [Configuration of the Two-Dimensional Scan Sensor]

The two-dimensional scan sensor of the present embodiment is provided indoors or outdoors and used for crime prevention or the like, and is used having been installed on, for example, a floor surface, a wall surface, or a ceiling.

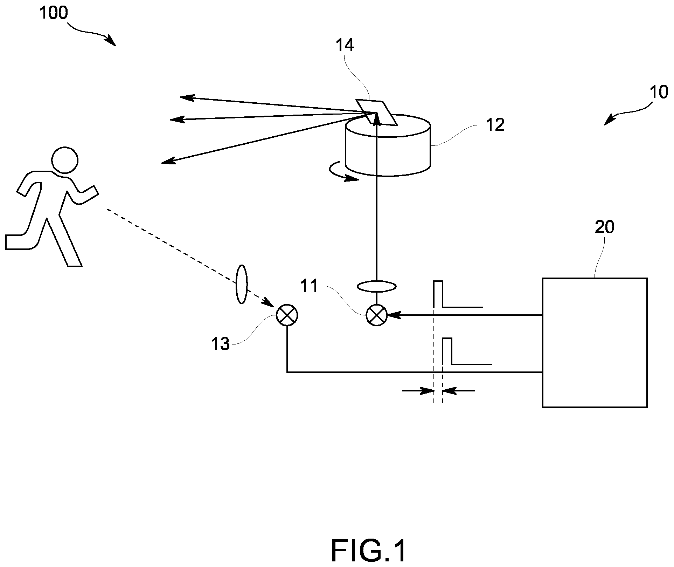

As shown in Fig. 1, this two-dimensional scan sensor 100 comprises a sensor unit 10 that scans light emitted from a light source along a two-dimensional plane, and an information processing device 20 that transmits and receives signals to and from the sensor unit 10.

As shown in Fig. 1, the sensor unit 10 has a light source 11, a scanning mechanism 12 that causes light emitted from the light source 11 to be scanned, and a photodetector 13 that receives reflected light reflected off an object located in a two-dimensional plane.

The light source 11 emits light that is scanned over a monitoring area set along a two-dimensional plane. The light source in the present embodiment is a laser light source that emits laser light, and specifically emits pulses of laser light.

The light source 11 is not limited to a laser light source, and may be a radiating body that emits electromagnetic waves such as millimeter waves or microwaves.

The scanning mechanism 12 causes the light emitted from the light source 11 to be scanned along a two-dimensional plane. As shown in Fig. 1, the scanning mechanism 12 of the present embodiment has a mirror 14 that reflects light emitted from the light source 11, and rotates said mirror 14 around a predetermined axis.

More specifically, mirror 14 is disposed in a posture at an angle relative to the laser light emitted from light source 11, and by rotating the mirror 14 around the predetermined rotation axis, the laser light is caused to scan along a predetermined plane.

It is also possible for the scanning mechanism 12 to be a mechanism that rotates the light source 11 around the predetermined rotation axis to scan the light emitted from the light source 11 along a predetermined plane, and in such a case the scanning mechanism 12 need not be equipped with a mirror 14. It is also possible for the scanning mechanism 12 to be configured so as to use a MEMS mirror. Furthermore, the scanning mechanism 12 is not limited to being a mechanical scanning type, but may be an electronic scanning type and, specifically, may be one using a method of combining the signals of a plurality of receiving antennas by changing their phases via hardware or software.

The photodetector 13 detects reflected light that has been reflected off an object in the two-dimensional plane and outputs a light detection signal indicating that a detection has occurred to the information processing device 20.

The photodetector 13 of the present embodiment receives laser light and is a photodiode, such as an APD (avalanche photodiode). However, the photodetector 13 is not necessarily limited to this, and may be changed to a different type as appropriate in accordance with, for example, the type of light source 11. It is also possible for the photodetector 13 to be configured to, by using a plurality of receiving antennas, be configured so as to be able to detect an angle by detecting the phase difference between each of the antennas.

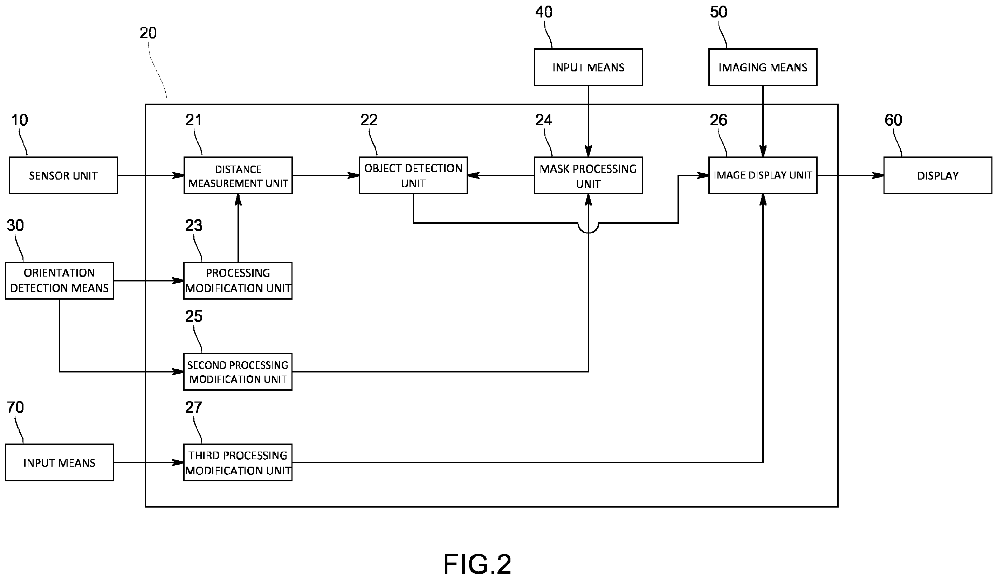

The information processing device 20 physically consists of a CPU, memory, etc., and, functionally, the CPU and other peripherals work together in accordance with a program stored in said memory to function as the distance measurement unit 21 and object detection unit 22, as shown in Fig. 2.

The distance measurement unit 21 calculates the distance to an object based on the time from when the light source 11 emits light to when the light reflected off the object located within a two-dimensional plane is received.

This distance measurement unit 21 is physically configured as a TOF (time of flight) circuit or the like, and is configured to calculate the distance to an object using a predetermined algorithm (hereinafter referred to as a calculation algorithm).

More specifically, the distance measurement unit 21 measures the time from when the light source 11 emits a pulse of laser light to when the laser light is received having been reflected by an object, and calculates the distance to the detected object by converting the measured time into a distance.

The object detection unit 22 detects an object located within the two-dimensional plane, and specifically, obtains coordinates, which are position information of the detected object, from the angle of the laser light received by the photodetector 13.

The sensor unit 10 configured in this manner is one capable of scanning the light emitted from the light source 11 along a vertical plane by installing the two-dimensional scan sensor 100 in an appropriate posture, and in this posture, the distance measurement unit 21 is capable of calculating the height of the object from a reference surface using the predetermined calculation algorithm. In this embodiment, when the height of an object measured by the distance measurement unit 21 is equal to or greater than a threshold value, the object detection unit 22 acquires the position information of the object and reports (issues an alert) that an object has been detected.

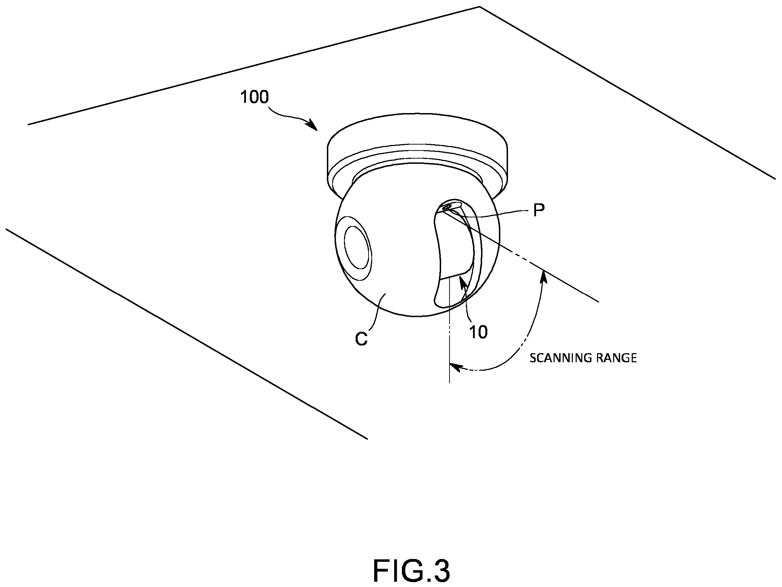

To explain in greater detail, as shown in Fig. 3, the sensor unit 10 is capable of scanning light along a vertical plane over a range of, for example, 90 degrees. That is to say, the sensor unit 10 is able to scan light that was emitted towards a surface of the floor so as to travel towards, for example, a wall surface (of a side wall); in other words, the sensor unit 10 is able to scan light emitted vertically downward such that it travels in a horizontal direction.

However, the angular range over which the light can be scanned by the sensor unit 10 is not necessarily limited to 90 degrees and, for example, the angular range may be modified so as to be lesser or greater than 90 degrees by a predetermined amount; furthermore, the sensor unit 10 may be capable of scanning over an angular range of 180 degrees or more.

In this way, by scanning light along the vertical plane, the distance measurement unit 21 calculates the height of the object from the floor surface in accordance with a predetermined calculation algorithm based on the time it takes for the laser light to be reflected by the floor surface and received, and the time it takes for the laser light to be reflected by the object and received.

The following explains how to operate the two-dimensional scan sensor 100 when it is installed on the ceiling, as shown in Fig. 3.

As shown in Fig 3., the configuration in convention is such that, in a use state in which the height of an object is measured from, for example, the floor surface, it is necessary to install and handle the device so that a specified part P, such as a specific screw, faces the floor surface (i.e., faces downward).

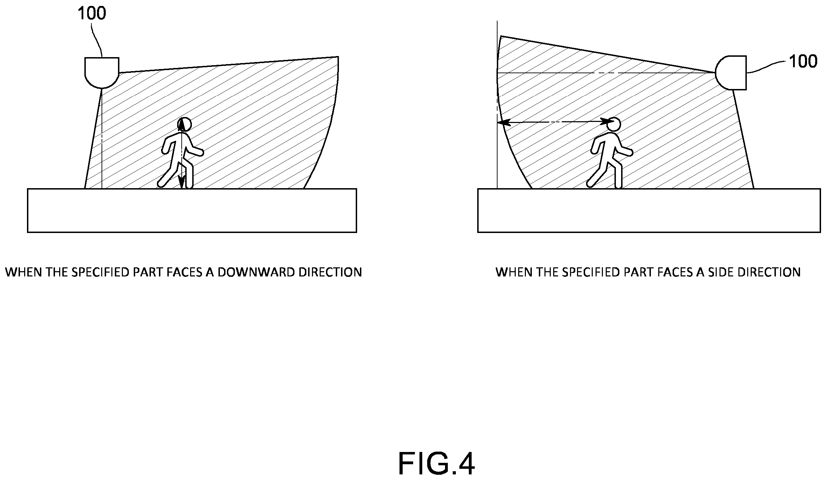

This is because, as shown in Fig 4., if a mistake is made and the device is installed so that the specified part faces, for example, a wall surface (a lateral direction), the distance from the wall surface to the object will be measured instead of the distance from the floor surface, and the height of the object will not be able to be measured correctly.

This problem is not limited to cases where the two-dimensional scan sensor 100 is installed on a ceiling, but also occurs when the sensor is installed on a wall surface; that is, for a device configured as in convention, if the specified part P is attached to the wall surface so as to face in the wrong direction, the device will not be able to correctly measure the height of the object.

The two-dimensional scan sensor 100 of the present embodiment has, in particular, a high degree of freedom in terms of installation, and it is easy for the specified part P to be attached facing the wrong direction.

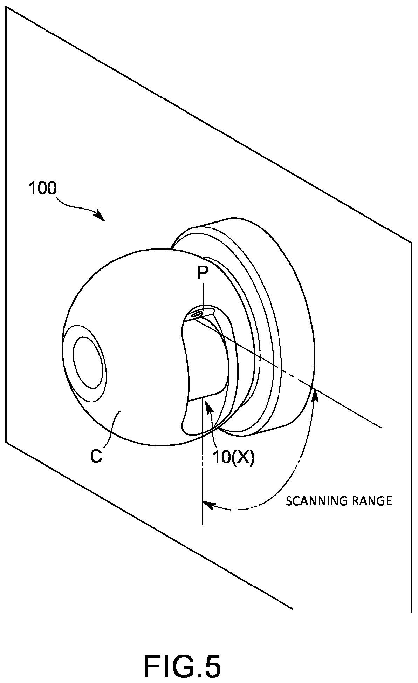

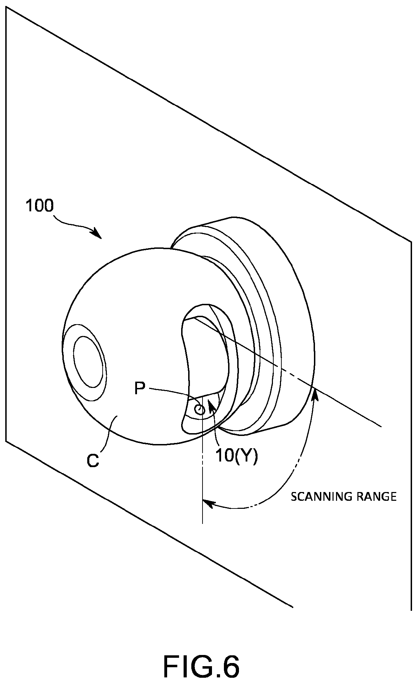

To explain in greater detail, as shown in Figs. 5 and 6, in the two-dimensional scan sensor 100 of the present embodiment, in a use state in which light emitted from the light source 11 is scanned along a vertical plane, the mounting posture of the sensor unit 10 is changeable between a first posture X in which the specified part P faces a first direction, and a second posture Y in which the specified part P faces a second direction orthogonal to the first direction.

In this configuration, the mounting posture of the sensor unit 10 is not limited only to either the first posture X or the second posture Y, but may be a posture between that of the first posture X and the second posture Y, or otherwise the specified part P may be a posture that may face in various directions.

With the above-described configuration, when, for example, the sensor unit 10 is installed so that it can scan light over a 90-degree range from a floor surface to a wall surface, the mounting posture of the sensor unit 10 can be a first posture X (see Fig. 5) in which the specified part P faces towards a downward direction (toward the floor surface) or a second posture Y (see Fig. 6) in which the specified part P faces towards a lateral direction (to the side wall).

In other words, this two-dimensional scan sensor 100 is configured such that, even if the scanning range of the light is the same, the specified part P may be oriented in different directions that are orthogonal to each other.

Therefore, as shown in Fig. 2, the two-dimensional scan sensor 100 of the present embodiment further includes an orientation detection means 30 for detecting the orientation of the specified part P of the sensor unit 10, and the above-mentioned information processing device 20 further includes a function as a processing modification unit 23 that changes the calculation algorithm of the distance measurement unit 21 based on the orientation information obtained by the orientation detection means 30.

The orientation detection means 30 detects whether or not the two-dimensional scan sensor 100 is in a normal installation posture, and specifically outputs the mounting angle of the two-dimensional scan sensor 100 as orientation information.

Moreover, a normal installation posture here is a posture in which the orientation of a specified part P, such as a specific screw, is in a normal orientation determined in advance and, in this embodiment, is a posture in which the specified part P faces the floor surface (downward, i.e., the first posture X in Fig. 5). In other words, in this embodiment, the orientation of the specified part P is designated as the mounting orientation of the two-dimensional scan sensor 100, and if the two-dimensional scan sensor 100 is installed in the correct mounting orientation, the orientation of the specified part P will be the normal orientation.

The orientation detection means 30 is built into a casing C, shown in Fig. 3, together with the sensor unit 10 and the like, and in this embodiment is configured to use an acceleration sensor. However, it is also possible for the orientation detection means 30 to be configured so as to use, for example, a gyro sensor or a magnetic sensor.

The processing modification unit 23 changes the algorithm used by the distance measurement unit 21, that is, the calculation algorithm for calculating the height of the object from the floor surface, based on the orientation information obtained by the orientation detection means 30.

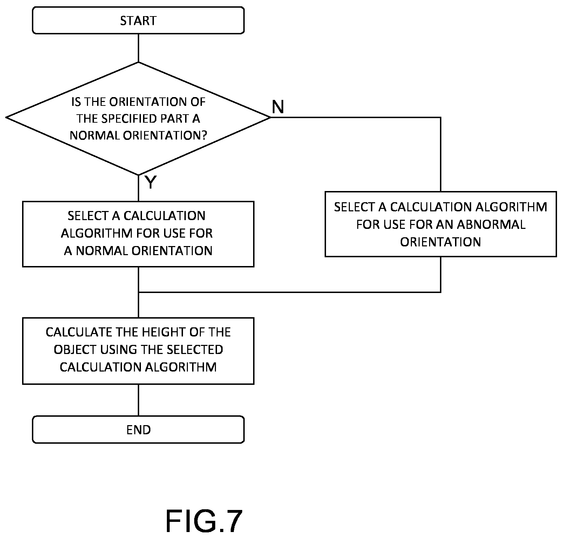

As shown in Fig. 7, the processing modification unit 23 determines whether the orientation of a specified part P is a normal orientation or not by determining whether the mounting angle indicated by the orientation information is within a normal angle range, and switches the calculation algorithm by the distance measurement unit 21 to one for normal orientation or abnormal orientation as appropriate based on the result of this determination.

The processing modification unit 23 of the present embodiment determines that the orientation of the specified part P is normal if the mounting angle indicated by the orientation information is vertically downward or within a predetermined angle range from vertically downward, and otherwise determines that the orientation of the specified part P is not a normal orientation (i.e., is an abnormal orientation).

In this embodiment, a calculation algorithm for use in normal orientation and a calculation algorithm for use in abnormal orientation are prepared so as to be calculation algorithms used by the distance measurement unit 21 and, for example, these are stored in the memory of the information processing device 20 in advance.

Configured as such, when the orientation of the specified part P is a normal orientation, in other words, when the two-dimensional scan sensor 100 is in a normal installation posture, the processing modification unit 23 selects the calculation algorithm for use in normal orientation as the calculation algorithm for the distance measurement unit 21, and the distance measurement unit 21 calculates the height of the detected object from the floor surface using said calculation algorithm for use in normal orientation.

On the other hand, when the orientation of the specified part P is not a normal orientation, in other words, when the two-dimensional scan sensor 100 is not in a normal installation posture, the processing modification unit 23 selects the calculation algorithm for use in abnormal orientation as the calculation algorithm for the distance measurement unit 21, and the distance measurement unit 21 calculates the height of the detected object from the floor surface using said calculation algorithm for use in abnormal orientation.

As explained with reference to Figs. 5 and 6, the two-dimensional scan sensor 100 of the present embodiment is configured so that the orientation of the specified part P may be different even if the scanning range of the light is the same, and these orientations may be orthogonal to each other.

In view of this, since the normal installation posture is one in which the specified part P faces downward, if the two-dimensional scan sensor 100 is not in the normal installation posture, there is a high likelihood that the specified part P faces in a lateral direction (a horizontal direction).

Therefore, in the present embodiment, for example, an inverted version of a distance value sequence or the like included in the calculation algorithm for use in normal orientation may be used as the calculation algorithm for use in abnormal orientation.

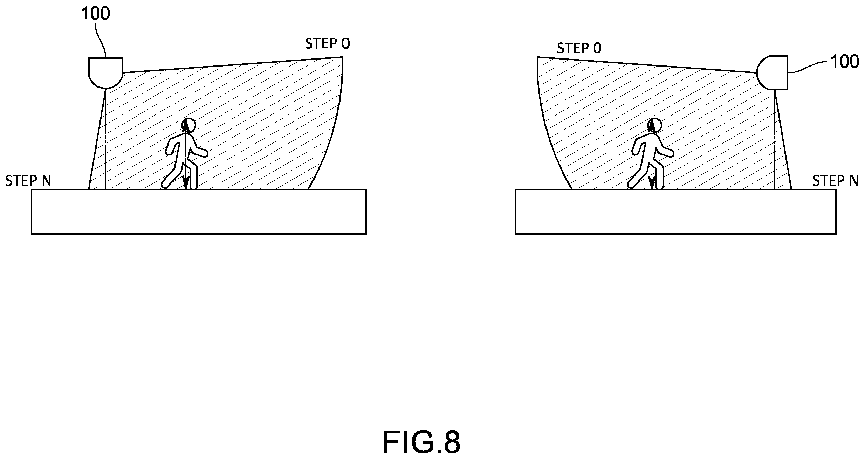

More specifically, as shown in Fig. 8, the distance measurement unit 21 of the present embodiment is configured to calculate the distance from a reference surface to the object using a plurality of steps 1 to N set so as to partition the scanning range of the light from the sensor unit 10.

The calculation algorithm for use in abnormal orientation has the step numbers of the calculation algorithm for use in normal orientation reversed; in other words, the sequence of steps 1 - N included in the calculation algorithm for use in normal orientation is the reverse of the sequence of steps 1 - N included in the calculation algorithm for use in abnormal orientation.

This configuration aims to simplify the processing preformed by the information processing device 20 by using, as a calculation algorithm for use in abnormal orientation, one in which the step numbers included in the calculation algorithm for use in normal orientation are inverted.

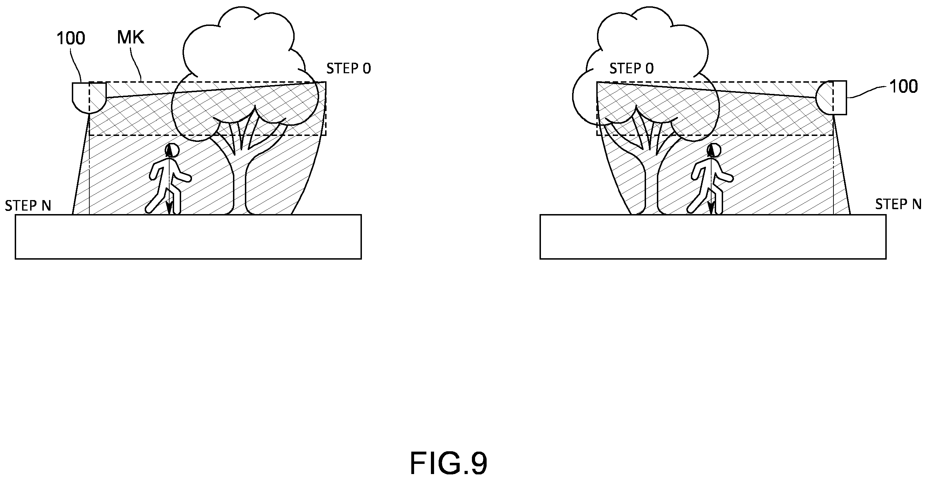

As shown in Figs. 2 and 9, the information processing device 20 of the present embodiment has the function of a mask processing unit 24 that, within the scanning range of light from the sensor unit 10, disables detection of objects in a mask range MK set in advance.

Here, "set in advance" means that it is set before the two-dimensional scan sensor 100 is used, that it is set before the two-dimensional scan sensor 100 is installed, or that it is set before the two-dimensional scan sensor 100 is shipped, etc.

The way in which the mask range MK is set may be such that a range from within the scanning range of light from sensor unit 10, selected in advance via an input means 40 or the like, is set as the mask range MK; or, a range other than a range set in advance may be set as the mask range MK.

In the present embodiment, the mask range MK is configured to be set based on the step numbers described above; specifically, a range corresponding to a plurality of a predetermined step numbers may be set as the mask range MK, or a range other than a range corresponding to a plurality of a predetermined numbers of steps may be set as the mask range MK.

When the mask range MK is set in this manner, the mask processing unit 24 is configured to execute a masking operation that disables detection of an object located in the mask range MK; specifically, it operates so as not to detect objects in the mask range MK, or it operates so as not to report (issue an alarm) even if an object located in the mask range MK is detected.

As shown in Fig. 2, in such a configuration, the information processing device 20 further includes a second processing modification unit 25 that modifies the algorithm of the mask processing performed by the mask processing unit 24 (hereinafter also referred to as the mask processing algorithm) based on the orientation information obtained by the above-mentioned orientation detection means 30.

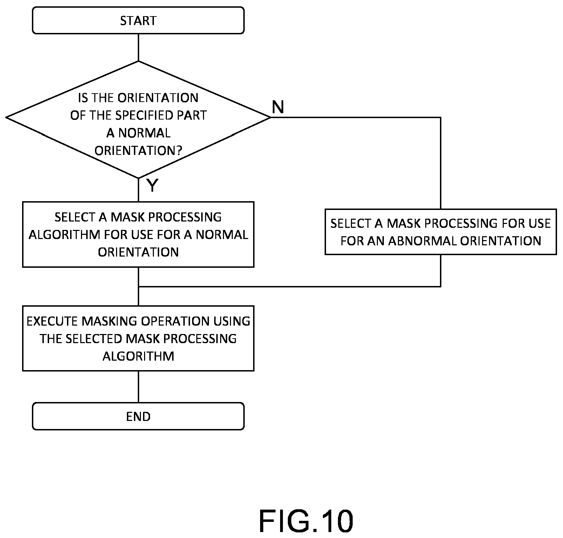

As shown in Fig. 10, the second processing modification unit 25 determines whether the orientation of the specified part P is a normal orientation or not by determining whether the mounting angle indicated by the orientation information is within a normal angle range, and switches the mask processing algorithm of the mask processing unit 24 to one for normal orientation or abnormal orientation as appropriate based on the result of this determination.

Specifically, when the orientation of the specified part P is a normal orientation, in other words, when the two-dimensional scan sensor 100 is in a normal installation posture, the second processing modification unit 25 selects the normal mask processing algorithm as the mask processing algorithm of the mask processing unit 24, and the mask processing unit 24 performs the masking operation using said mask processing algorithm for use in normal orientation.

On the other hand, when the orientation of the specified part P is not a normal orientation, in other words, when the two-dimensional scan sensor 100 is not in a normal installation posture, the second processing modification unit 25 selects the abnormal mask processing algorithm as the mask processing algorithm of the mask processing unit 24, and the mask processing unit 24 performs the masking operation using said mask processing algorithm for use in abnormal orientation.

In the present embodiment, the calculation algorithms described above are such that the step number for normal orientation and for abnormal orientation is swapped, and the mask processing algorithms used are also algorithms in which the step number for normal orientation and abnormal orientation is swapped.

In other words, in this embodiment, the operation by the processing modification unit 23 and the operation by the second processing modification unit 25 are executed simultaneously, and when a calculation algorithm for a normal orientation is selected, a mask processing algorithm for a normal orientation is also selected; and when a calculation algorithm for an abnormal orientation is selected, a mask processing algorithm for an abnormal orientation is also selected.

However, the operation by the processing modification unit 23 and the operation by the second processing modification unit do not necessarily need to be executed simultaneously, and the contents of the operations and the operation timings thereof may be independent of each other.

Furthermore, as shown in Fig. 2, the two-dimensional scan sensor 100 of the present embodiment is equipped with an imaging means 50 that images part or a whole of the scanning range of the light from the sensor unit 10, and the information processing device 20 further has a function as an image display unit 26 that displays the image obtained by the imaging means 50.

The imaging means 50 is housed in the casing C together with the sensor unit 10, and outputs still images or videos as image data.

The image display unit 26 displays still images or videos, which are image data acquired by the imaging means 50, for example, on a display 60 or the like.

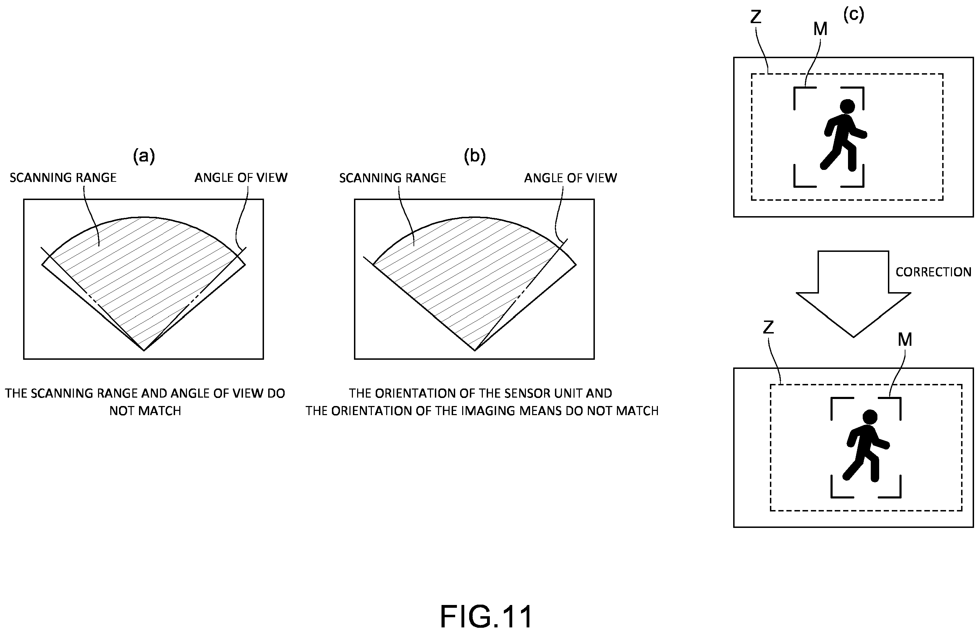

The image display unit 26 displays the image data including the time of detection when the above-mentioned object detection unit 22 reports (issues an alert) that an object has been detected; specifically, the image display unit 26 obtains the coordinates of the object detected by the object detection unit 22 and displays a marker M indicating the position of the object together with an actual image Z in which the object is captured (see Fig. 11c).

That is, the image display unit 26 is configured to display the above-mentioned marker M superimposed on the actual image Z in which the detected object is captured, and the actual image Z and the marker M are displayed simultaneously on the same screen.

As shown in Fig. 2, in this configuration, the information processing device 20 further includes a function as a third processing modification unit 27 that modifies the display content of the image displayed by the image display unit 26.

More specific embodiments of the third processing modification unit 27 may include, as shown in Fig. 2, a mode in which the display content of the displayed image is modified based on the amount of deviation between the imaging means 50 and the sensor unit 10 inputted via an input means 70 and, although not shown in the figures, a mode in which the display content of the displayed image is changed based on the amount of deviation between the imaging means 50 and the sensor unit 10 detected using an acceleration sensor or the like other than that of the orientation detection means 30 described above.

This third processing modification unit 27 corrects the position of an object appearing in the actual image Z or the position of a marker M indicating the position of an object appearing in the image, and specifically, modifies the position of the actual image Z on the display 60 or the position of the marker M on the display 60.

More specifically, when the scanning range of the light from the sensor unit 10 does not match the angle of view of the camera (see Fig. 11a) or when the orientation of the sensor unit 10 does not match the orientation of the imaging means 50 (see Fig. 11b), the third processing modification unit 27 corrects the position of the object or marker M appearing in the actual image Z so that the object and marker M appearing in the actual image Z overlap (see Fig. 11c).

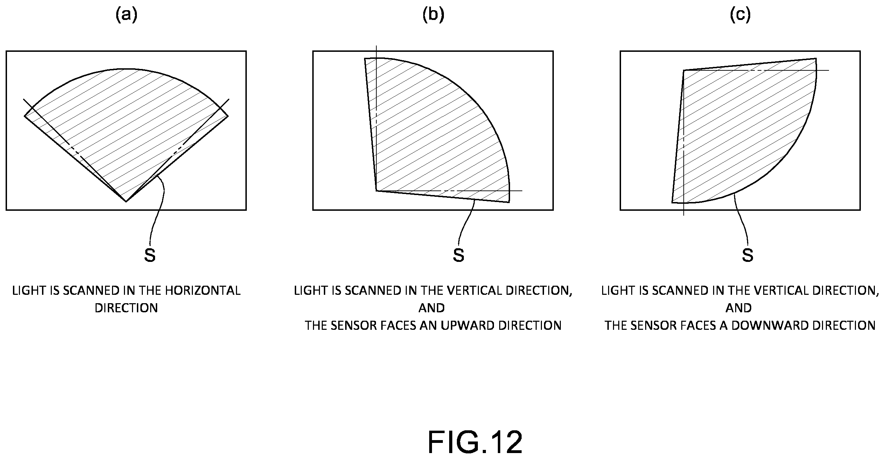

Furthermore, as shown in Fig. 12, when the image display unit 26 displays a scanning range symbol S indicating the scanning range of light from the sensor unit 10, the third processing modification unit 27 may modify the display mode of the scanning range symbol S based on the orientation information obtained by the orientation detection means 30.

Examples of specific embodiments include a case where light from the sensor unit 10 is scanned horizontally (see Fig. 12a), a case where light from the sensor unit 10 is scanned vertically and the two-dimensional scan sensor 100 is attached, for example, to a floor surface facing upwards (see Fig. 12b), and a case where light from the sensor unit 10 is scanned vertically and the two-dimensional scan sensor 100 is attached, for example, to a ceiling facing downwards (see Fig. 12c), in which the scanning range symbols S are displayed in different display modes.

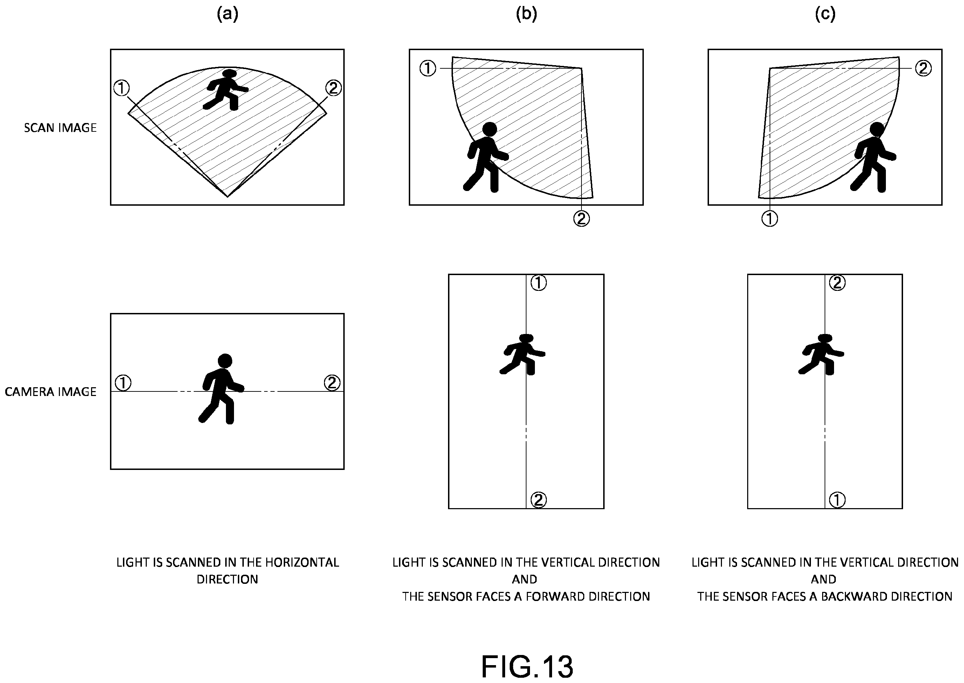

Furthermore, as shown in Fig. 13, the third processing modification unit 27 may rotate and display a still image or a video, which is the image data, based on the orientation information obtained by the orientation detection means 30.

As an example of a specific embodiment, when the light from the sensor unit 10 is scanned in a horizontal direction, the third processing modification unit 27 sets the display mode of the still image or the video via the image display unit 26 to a horizontal display (Fig. 13a), and when the light from the sensor unit 10 is scanned in a vertical direction, the third processing modification unit 27 sets the display mode of the still image or the video via the image display unit 26 to a vertical display (Figs. 13b and 13c).

Furthermore, when the light from the sensor unit 10 is scanned in a vertical direction, the third processing modification unit 27 may set the display mode of the still image or video of the image display unit 26 to be upside down when the two-dimensional scan sensor 100 faces in a forward direction (Fig. 13b) and when it faces in a backward direction (Fig. 13c).

### [Effect of the Present Embodiment]

According to the two-dimensional scan sensor 100 configured like this, the orientation of a specified part P of the sensor unit 10 is detected, and the calculation algorithm of the distance measurement unit 21 is modified based on the orientation information, so that distance measurements can be performed regardless of the mounting orientation, and it is possible to prevent repeat work due to incorrect installation.

In addition, since the sensor unit 10 is capable of scanning the light emitted from the light source 11 along a vertical plane, and the distance measurement unit 21 is capable of calculating the height of the object from the reference surface, the height of the object can be measured correctly regardless of the mounting orientation.

Moreover, in a use state in which light emitted from the light source 11 is scanned along a vertical plane, because the mounting posture of the sensor unit 10 is changeable between a first posture X in which the specified part P faces a first direction, and a second posture Y in which the specified part P faces a second direction orthogonal to the first direction, the degree of freedom of installation is improved while preventing repeat work due to incorrect installation.

Furthermore, the processing modification unit 23 selectively switches the calculation algorithm by the distance measurement unit 21 between either the normal orientation or the abnormal orientation depending on whether the orientation of the specified part P indicated by the orientation information is the normal orientation or not, thereby simplifying the processing.

Specifically, because the sequence of steps 1 to N included in the calculation algorithm for use in normal orientation is the reverse of the sequence of steps 1 to N included in the calculation algorithm for use in abnormal orientation, no complex processing is required, and processing can be simplified.

Because a mask processing unit 24 that disables detection of objects within a mask range determined in within the scanning range of light from the sensor unit 10, and a second processing modification unit 25 that changes the algorithm of the mask processing by the mask processing unit 24 based on orientation information are included, a mask function is included to prevent false alarms due to, for example, the detection of trees or the like, and the mask function can operate correctly regardless of the mounting orientation of the two-dimensional scan sensor 100.

Due to being equipped with an imaging means 50 that images part or all of the scanning range of light from the sensor unit 10, an image display unit 26 that displays the image obtained by the imaging means 50, and a third processing modification unit 27 that changes the display content of the image displayed by the image display unit 26 based on orientation information, an image display function to improve usability is included, and this image display function can operate correctly regardless of the mounting orientation of the two-dimensional scan sensor 100.

The third processing modification unit 27 is configured to correct the position of an object appearing in an image or the position of a marker M indicating the position of an object appearing in an image based on the orientation information obtained by the orientation detection means 30, thereby improving the decipherability of the image.

Furthermore, the third processing modification unit 27 modifies the display mode of the scanning range symbol S and the display orientation of the still image or video captured by the imaging means 50 based on the orientation information obtained by the orientation detection means 30, thereby further improving image decipherability.

### [Other Embodiments]

The present invention is not limited to the above embodiments.

For example, in the above embodiments, the distance measurement unit 21 calculates the height of an object from the floor surface, but it may also calculate the distance of an object from a side wall or a ceiling. That is, in the above embodiments, the floor surface is described as the reference surface, but various wall surfaces such as a side wall or a floor surface may be used as the reference surface.

In addition, in the above embodiments, the calculation algorithm for use in abnormal orientation was one in which the step number of the calculation algorithm for use in normal orientation had been reversed; however, for example, it is also possible for it to be an algorithm obtained by modifying the algorithm for use in normal orientation by using the mounting angle obtained by the orientation detection means 30 as a parameter.

An example of such a calculation algorithm for use in abnormal orientation may be one in which, for example, of the step numbers included in the calculation algorithm for use in normal orientation, only the valid step numbers are made to be valid based on the mounting angle or the like.

Furthermore, the present invention is not limited to the above-described embodiment, and it goes without saying that various modifications are possible without departing from the spirit of the present invention.

### [Industrial Applicability]

According to the present invention, it is possible to measure distance regardless of mounting orientation, and to avoid repeat work due to incorrect installation.

### [Reference Sign List]

100 two-dimensional scan sensor
10 sensor unit
11 light source
12 scanning mechanism
13 photodetector
14 mirror
20 information processing device
21 distance measurement unit
22 object detection unit
23 processing modification unit
24 mask processing unit
25 second processing modification unit
26 image display unit
27 third processing modification unit
30 orientation detection means
P specified part
X first posture
Y second posture
M marker

## Claims

1. A two-dimensional scan sensor, comprising: a sensor unit that scans light emitted from a light source along a two-dimensional plane;
a distance measurement unit that calculates a distance from a reference surface to an object located in the two-dimensional plane based on a time from when the light source emits light to when light that has been reflected off the object is received;
an orientation detection means for detecting an orientation of a specified part of the sensor unit; and
a processing modification unit that modifies a calculation algorithm of the distance measurement unit based on orientation information obtained by the orientation detection means.

2. The two-dimensional scan sensor according to claim 1, wherein the sensor unit is capable of scanning light emitted from the light source along a vertical plane, and
the distance measurement unit is capable of calculating a height of the object from the reference surface.

3. The two-dimensional scan sensor according to claim 2, wherein in a use state in which light emitted from the light source is scanned along the vertical plane, the mounting posture of the sensor unit is changeable between a first posture in which the specified part faces a first direction, and a second posture in which the specified part faces a second direction orthogonal to the first direction.

4. The two-dimensional scan sensor according to claim 1, wherein the processing modification unit determines whether or not the orientation of the specified part indicated by the orientation information is a normal orientation and switches the calculation algorithm of the distance measurement unit between one for use in normal orientation and one for use in abnormal orientation.

5. The two-dimensional scan sensor according to claim 4, wherein the distance measurement unit is configured to calculate the distance from the reference surface to the object using a plurality of steps 1 - N set so as to partition the a scanning range of light from the sensor unit, and
a sequence of steps 1 - N included in the calculation algorithm for use in the normal orientation and a sequence of steps 1 - N included in the calculation algorithm for use in the abnormal orientation are reversed.

6. The two-dimensional scan sensor according to claim 1, comprising a mask processing unit that, within a scanning range of light from the sensor unit, disables detection of objects in a mask range set in advance, and
a second processing modification unit that modifies a mask processing algorithm of the mask processing unit based on the orientation information.

7. The two-dimensional scan sensor according to claim 1, comprising an imaging means that images a part or a whole of a scanning range of light from the sensor unit,
an image display unit that displays an image obtained from the imaging means, and
a third processing modification unit that modifies display content of the image displayed by the image display unit.

8. The two-dimensional scan sensor according to claim 7, wherein the third processing modification unit corrects a position of an object captured in the image or a position of a marker indicating a position of an object appearing in the image.
